(19) **Europäisches Patentamt**
**European Patent Office**
**Office européen des brevets**

(11) **EP 2 372 669 B1**

(12) **EUROPEAN PATENT SPECIFICATION**

(45) Date of publication and mention of the grant of the patent:
**19.08.2020 Bulletin 2020/34**

(21) Application number: **09829021.6**

(22) Date of filing: **19.11.2009**

(51) Int Cl.:
*G08G 1/16* *(2006.01)*     *B60T 7/12* *(2006.01)*
*G06T 1/00* *(2006.01)*     *G06T 7/60* *(2017.01)*

(86) International application number:
**PCT/JP2009/069613**

(87) International publication number:
**WO 2010/061773 (03.06.2010 Gazette 2010/22)**

(54) **CAMERA DEVICE**

KAMERAVORRICHTUNG

DISPOSITIF CAMÉRA

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.11.2008 JP 2008304957**

(43) Date of publication of application:
**05.10.2011 Bulletin 2011/40**

(73) Proprietor: **Hitachi Automotive Systems, Ltd.**
**Hitachinaka-shi**
**Ibaraki 312-8503 (JP)**

(72) Inventors:
  • **SHIMA Takeshi**
    **Hitachi-shi**
    **Ibaraki 319-1292 (JP)**
  • **HIGUCHI Mirai**
    **Hitachi-shi**
    **Ibaraki 319-1292 (JP)**
  • **MURAMATSU Shoji**
    **Hitachi-shi**
    **Ibaraki 319-1292 (JP)**
  • **MONJI Tatsuhiko**
    **Hitachinaka-shi**
    **Ibaraki 312-8503 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A2- 0 933 725      WO-A2-03/093857**
**JP-A- 9 081 734      JP-A- H0 981 734**
**JP-A- 11 213 138      JP-A- 2001 331 787**

• **BERTOZZI M ET AL: "GOLD: A PARALLEL REAL-TIME STEREO VISION SYSTEM FOR GENERIC OBSTACLE AND LANE DETECTION", IEEE TRANSACTIONS ON IMAGE PROCESSING, IEEE SERVICE CENTER, PISCATAWAY, NJ, US, vol. 7, no. 1, 1 January 1998 (1998-01-01) , pages 62-80, XP000727376, ISSN: 1057-7149, DOI: 10.1109/83.650851**
• **Ljubo Vlacic ET AL: "Intelligent Vehicle Technologies: Theory and Applications (Automotive Engineering Series)", Intelligent Vehicle Technologies: Theory and Applications (Automotive Engineering Series), 6 January 2002 (2002-01-06), pages 85-170, XP055009992, ISBN: 978-0-75-065093-9 Retrieved from the Internet: URL:http://www.amazon.com/Intelligent-Vehi cle-Technologies-Ljubo-Vlacic/dp/075065093 1 [retrieved on 2011-10-19]**
• **ROLAND CHAPUIS ET AL: "Accurate Road Following and Reconstruction by Computer Vision", IEEE TRANSACTIONS ON INTELLIGENT TRANSPORTATION SYSTEMS, IEEE, PISCATAWAY, NJ, USA, vol. 3, no. 4, 1 December 2002 (2002-12-01), XP011074890, ISSN: 1524-9050**

EP 2 372 669 B1

**(Cont. next page)**

- DANESCU R ET AL: "Lane Geometry Estimation in Urban Environments Using a Stereovision System", INTELLIGENT TRANSPORTATION SYSTEMS CONFERENCE, 2007. ITSC 2007. IEEE, IEEE, PI, 1 September 2007 (2007-09-01), pages 271-276, XP031151431, ISBN: 978-1-4244-1395-9
- ZHENCHENG HU ET AL: "A Complete U-V-Disparity Study for Stereovision Based 3D Driving Environment Analysis", 3-D DIGITAL IMAGING AND MODELING, 2005. 3DIM 2005. FIFTH INTERNATIONAL CONFERENCE ON OTTAWA, ON, CANADA 13-16 JUNE 2005, PISCATAWAY, NJ, USA,IEEE, 13 June 2005 (2005-06-13), pages 204-211, XP010810998, DOI: 10.1109/3DIM.2005.6 ISBN: 978-0-7695-2327-9

**Description**

Technical Field

The present invention relates to a camera device including a plurality of image capturing units which each take an image of a traveling road ahead of a target vehicle.

Background Art

In order to realize safe traveling of a vehicle, a device which detects a dangerous event around the vehicle, and automatically controls steering, an accelerator, and a brake of the vehicle, to thereby avoid the dangerous event has been researched and developed, and has already been mounted on some vehicles.

In particular, in order to enable a target vehicle to enter a curve existing ahead of a traveling road thereof at an appropriate speed, a before-curve automatic deceleration control device which automatically adjusts a braking force before the curve to decelerate the vehicle is mounted on the vehicle. This is effective to prevent an accident in which the vehicle deviates from the road while traveling on the curve.

A method of detecting a shape (shape) of a curve can be exemplified as one of methods for realizing the before-curve automatic deceleration control. Patent Document 1 describes a technology in which a white line of a road is detected from an image picked up by an in-vehicle camera, and a curvature of the traveling road is calculated from the white line. In addition, Patent Document 2 describes a technology in which an in-vehicle radar detects a three-dimensional object such as a guardrail which is provided along a roadside, and a shape of a curve ahead of a target vehicle is recognized.

> Patent Document 1: JP Patent Publication (Kokai) No. 2001-10518 A
> Patent Document 2: JP Patent Publication (Kokai) No. 2001-256600 A

Disclosure of the Invention

Problems to be Solved by the Invention

However, in the technology described in Patent Document 1, in the case where there is no white line on the traveling road of the target vehicle, or in the case where the white line is difficult to recognize due to blurring or the like, the road shape of the traveling road ahead of the target vehicle cannot be detected. In addition, if a traveling speed is high, it is necessary to determine a shape of a farther curve, that is, a road shape of a distant portion on the traveling road. However, it is difficult to detect with high accuracy a curvature of a far white line from an image picked up by the in-vehicle camera.

In addition, in the technology described in Patent Document 2, in the case where there is no three-dimensional object by the roadside, the road shape of the traveling road ahead of the target vehicle cannot be detected. Accordingly, in the technologies described in Patent Document 1 and Patent Document 2, it may be erroneously determined that a curve does not exist in spite of the existence of the curve ahead of the target vehicle, or it may be erroneously determined that a curve exists in spite of the non-existence of the curve, and hence appropriate automatic brake control cannot be performed by the vehicle control device.

The present invention has been made in view of the above-mentioned points, and therefore has an object to provide a camera device which is capable of estimating a road shape of a traveling road ahead of a target vehicle or capable of determining whether or not the target vehicle needs to be decelerated by controlling a brake before a curve, even in a situation where a white line of the road or a roadside three-dimensional object is difficult to detect.

Means for Solving the Problems

The camera device according to the present invention, which has been made in view of the above-mentioned problems, detects three-dimensional objects ahead existing in the vicinity of a vanishing point of a traveling road on the basis of images picked up by a plurality of image capturing units, and estimates a road shape of a distant portion on the traveling road on the basis of the detection result.

Advantages of the Invention

The camera device according to the present invention detects the three-dimensional objects ahead in the vicinity of the vanishing point ahead of the vehicle, and estimates the road shape of the distant portion on the traveling road on the basis of the detection result. Accordingly, automatic deceleration control can be performed before the vehicle enters a curve at which brake control is necessary, even in the situation where a white line of the traveling road or a roadside three-dimensional object is difficult to detect.

In addition, the camera device according to the present invention detects the three-dimensional objects ahead in the vicinity of the vanishing point ahead of the vehicle, and calculates distribution of the three-dimensional objects ahead. Then, it is determined whether or not the brake control of the target vehicle needs to be performed, on the basis of the distribution of the three-dimensional objects ahead, a distance from the target vehicle to the three-dimensional objects ahead, and a speed of the target vehicle. Accordingly, the automatic deceleration control can be performed before the vehicle enters the curve at which the brake control is necessary.

The present description encompasses the contents described in the description and/or the drawings of JP Patent Application No. 2008-304957 on the basis of which the right of priority of the present application is claimed.

Brief Description of the Drawings

Figure 1 is a view illustrating an outline of the present embodiment.
Figure 2 is a flow chart showing contents of processing performed by a distance information calculation unit.
Figure 3 is a flow chart showing contents of processing performed by a white line detection unit.
Figure 4 is a flow chart showing contents of processing performed by a traveling road surface calculation unit.
Figure 5 is a flow chart showing contents of processing performed by a roadside detection unit.
Figure 6 is a flow chart showing contents of processing performed by a three-dimensional object ahead detection unit.
Figure 7 is a flow chart showing contents of processing performed by a curve ahead estimation unit.
Figure 8 is a flow chart showing contents of processing performed by a brake control determination unit.
Figure 9 is a view illustrating correspondence points between right and left images in a stereo camera device.
Figure 10 is a view illustrating how to obtain the correspondence points between the right and left images.
Figure 11 is a view illustrating how to calculate a parallax in the stereo camera device.
Figure 12 is a view illustrating contents of a distance image.
Figures 13 are views each illustrating how to obtain distribution of three-dimensional objects ahead.
Figure 14 is a view illustrating contents of processing performed by a brake control determination unit.
Figure 15 is a view illustrating a method of detecting a white line.
Figure 16 is a view illustrating conversion from a u-v coordinate system to an x-z coordinate system.
Figure 17 is a view illustrating calculation of a road shape.
Figure 18 is a view illustrating the calculation of the road shape.

Description of Symbols

101 ... three-dimensional object ahead, 102 ... road, 103 ... white line, 104 ... roadside three-dimensional object, 105 ... stereo camera device, 106 ... vehicle, 107 ... left image capturing unit, 108 ... right image capturing unit, 109 ... distance information calculation unit, 110 ... white line detection unit, 111 ... traveling road surface calculation unit, 112 ... roadside detection unit, 113 ... curve ahead estimation unit (road shape estimation unit), 114 ... three-dimensional object ahead detection unit, 115 ... brake control learning data, 116 ... brake control determination unit, 117 ... vehicle control device

Best Mode for Carrying Out the Invention

Next, an embodiment of the present invention is described below in detail with reference to the drawings. In the present embodiment, a description is given of a case where an image of a stereo camera device 105 mounted on a vehicle 106 is used to be applied to a system which estimates a road shape of a traveling road ahead of a target vehicle.

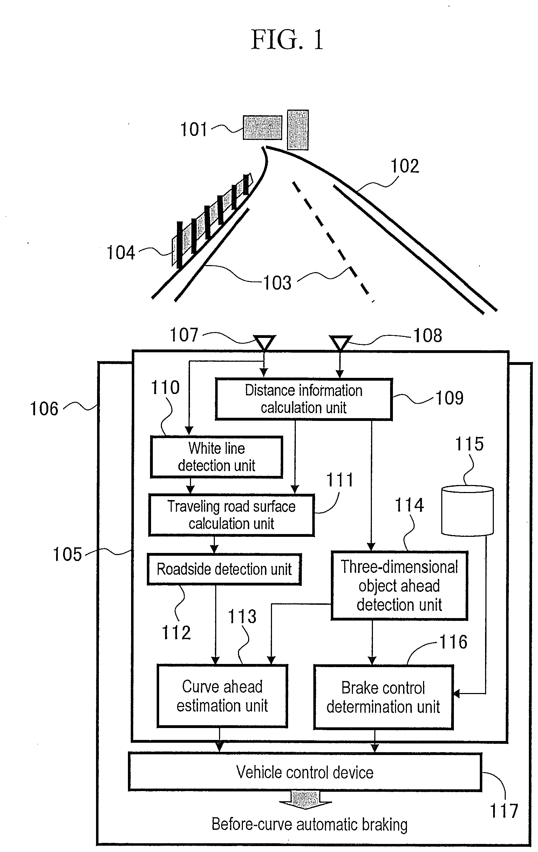

First, the outline of the present invention is described with reference to Figure 1. In Figure 1, reference numeral 105 denotes a stereo camera device (camera device) mounted on the vehicle 106. The stereo camera device 105 has an image pick-up range which is ahead of the traveling road of the vehicle 106, and is configured to detect a three-dimensional object existing ahead of the traveling road. A detailed configuration of the stereo camera device 105 will be described later.

As illustrated in Figure 1, when the vehicle 106 which is a target vehicle is traveling on a road 102, the stereo camera device 105 detects types and three-dimensional positions of: a white line 103 on the road 102; a roadside three-dimensional object 104 such as a guardrail which is provided along the road 102; and a three-dimensional object ahead 101 existing in the vicinity of a vanishing point ahead of the traveling road.

Then, on the basis of the detection result, the stereo camera device 105 determines whether or not the road 102 curves ahead, and transmits an estimation value of a shape of the curve or determination information as to whether or not automatic brake control is necessary, to a vehicle control device 117 mounted on the vehicle 106.

On the basis of the estimation value of the shape of the curve ahead of the vehicle 106 or the determination information as to whether or not the automatic brake control is necessary which is received from the stereo camera device 105, the vehicle control device 117 performs the automatic brake control, to thereby decelerate the vehicle 106 so that the vehicle 106 can travel safely on the curve ahead.

Next, with reference to Figure 1, the detailed configuration of the stereo camera device 105 is described below. The stereo camera device 105 includes, as its constituent elements, a left image capturing unit 107 and a right image capturing unit 108, a distance information calculation unit 109, a white line detection unit 110, a traveling road surface calculation unit 111, a roadside detection unit 112, a three-dimensional object ahead detection unit 114, a curve ahead estimation unit 113, and a brake control determination unit 116.

The left image capturing unit 107 and the right image capturing unit 108 are provided in pairs, and each take an image ahead of the vehicle 106. The road 102, the white line 103, the three-dimensional object 104 along the road 102 such as a guardrail, and the far three-dimensional object 101 ahead of the road 102 fall within an image pick-up range of each of the left image capturing unit 107 and the right image capturing unit 108.

Both of the left image capturing unit 107 and the right image capturing unit 108 are formed of a lens and a CCD, and a device which can take an image in the above-mentioned image pick-up range is used therefor. The left image capturing unit 107 and the right image capturing unit 108 are disposed so that a line connecting therebetween is parallel to a surface of the road 102 and is orthogonal to a traveling direction of the vehicle 106. A distance d between the left image capturing unit 107 and the right image capturing unit 108 is decided depending on how far from the vehicle 106 should be set as a detection range.

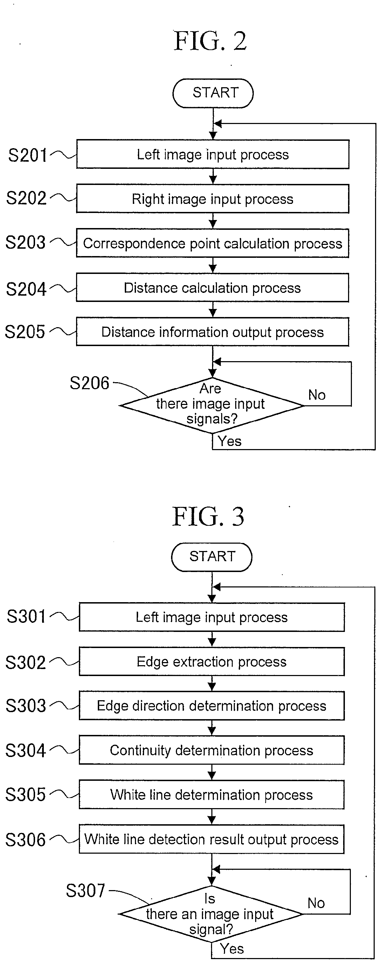

Figure 2 is a flow chart showing contents of processing performed by the distance information calculation unit 109. The distance information calculation unit 109 calculates the presence or absence of the three-dimensional object ahead 101 and a distance from the vehicle 106 to the three-dimensional object ahead 101, on the basis of the respective images picked up by the left image capturing unit 107 and the right image capturing unit 108.

First, in a left image input process S201, the distance information calculation unit 109 receives image data picked up by the left image capturing unit 107. Next, in a right image input process S202, the distance information calculation unit 109 receives image data picked up by the right image capturing unit 108. Here, the left image input process S201 and the right image input process S202 may be simultaneously performed as parallel processing.

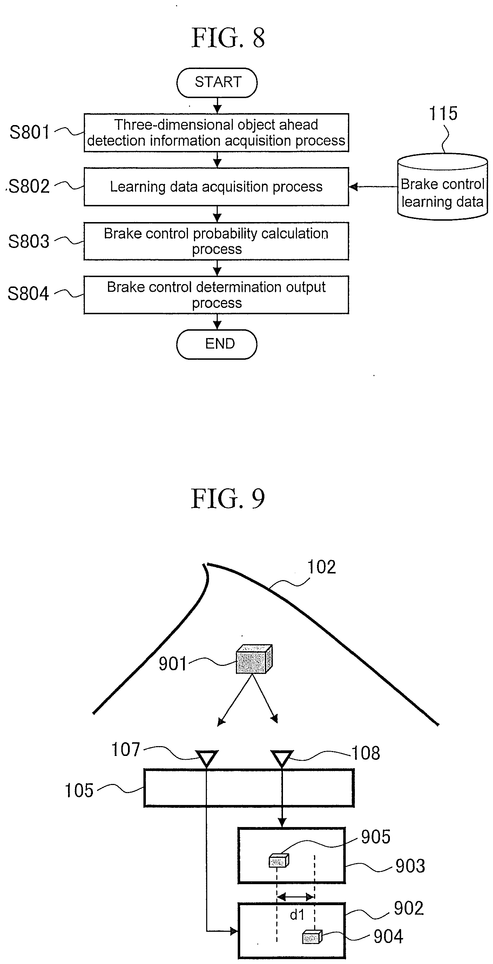

Next, in a correspondence point calculation process S203, two pieces of right and left image data acquired in the left image input process S201 and the right image input process S202 are compared with each other, and a portion in which an image of an identical object is picked up is identified. For example, as illustrated in Figure 9, when an image of an object (three-dimensional object) 901 existing on the road 102 is picked up by the stereo camera device 105, the images picked up by the left image capturing unit 107 and the right image capturing unit 108 are obtained as a left image 902 and a right image 903, respectively.

Here, the image of the identical object 901 is formed at a position of reference numeral 904 on the left image 902, and is formed at a position of reference numeral 905 on the right image 903, so that a difference of d1 occurs in the lateral direction of the image. Accordingly, it is necessary to indentify where on the right image 903 the image of the object 901 formed at the position of reference numeral 904 on the left image 902 is formed.

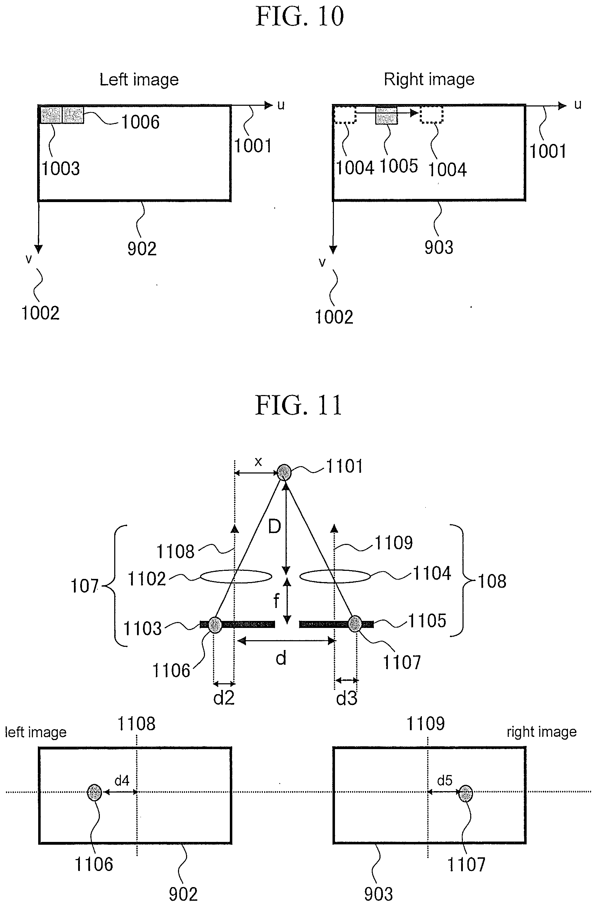

With reference to Figure 10, a description is given of a method of indentifying where on the right image 903 an image of a particular object formed on the left image 902 is formed. In Figure 10, in terms of coordinate systems of the left image 902 and the right image 903, the lateral direction is assumed as a u axis 1001, and the longitudinal direction is assumed as a v axis 1002.

First, on the left image 902, a rectangular search region 1003 surrounded by $(u_1, v_1)$, $(u_1, v_2)$, $(u_2, v_1)$, and $(u_2, v_2)$ is set in the u-v coordinate system. Next, in a rectangular search region 1004 surrounded by $(U, v_1)$, $(U, v_2)$, $(U + (u_2 - u_1), v_1)$, and $(U + (u_2 - u_1), v_2)$ on the right image 903, scanning is performed in the right direction of the image (the direction indicated by an arrow of Figure 10) while a value of U is increased from $u = 0$ to $u = u_3$.

Then, correlation values of the image within the search region 1003 and the image within the search region 1004 are compared with each other, and it is assumed that the image of the identical object 901 with the image of the object formed in the search region 1004 is formed at a position of $(u_4, v_1)$, $(u_4, v_2)$, $(u_4 + (u_2 - u_1), v_1)$, and $(u_4 + (u_2 - u_1), v_2)$ in a search region 1005 on the right image 903 having the highest correlativity with the search region 1003 on the left image 902. In this case, it is assumed that respective pixels within the search region 1003 correspond to respective pixels within the search region 1005.

Then, when the search region 1004 on the right image 903 is scanned, if a region in which the correlation value is equal to or larger than a given value does not exist, it is determined that there is no correspondence point within the right image 903 corresponding to the search region 1003 on the left image 902.

Next, the search region on the left image 902 is shifted to a position of 1006, and the same processing is performed. In this way, the search region on the left image 902 is scanned for the entire left image 902, and correspondence points within the right image 903 are obtained for all pixels on the left image 902. If the correspondence point is not found, it is determined that there is no correspondence point.

Next, a description is given of the details of a distance calculation process S204 in the flow chart of Figure 2. In this process, with regard to the correspondence points between the left image 902 and the right image 903 at which the image of the identical object 901 is formed, which are obtained in the above-mentioned correspondence point calculation process S203, it is calculated how far each correspondence point is located from the stereo camera device 105.

First, with reference to Figure 11, a description is given of a method of calculating a distance D of a correspondence point 1101 between the left image 902 and the right image 903 from the camera. In Figure 11, the left image capturing unit 107 is a camera which is formed of a lens 1102 and an image plane 1103 and has a focal length f and an optical axis 1108, and the right image capturing unit 108 is a camera which is formed of a lens 1104 and an image plane 1105 and has a focal length f and an optical axis 1109.

In the case where the point 1101 exists ahead of these cameras, an image of the point 1101 is formed at a point 1106 on an image plane 1103 of the left image capturing unit 107 (a distance of $d_2$ from an optical axis 1108), and hence the point 1101 becomes the point 1106 on the left image 902 (a position of $d_4$ pixels from the optical axis 1108). Similarly, the image of the point 1101 ahead of the cameras is formed at a point 1107 on an image plane 1105 of the right image capturing unit 108 (a distance of $d_3$ from an optical axis 1109), and hence the point 1101 becomes the point 1107 on the right image 903 (a position of $d_5$ pixels from the optical axis 1109).

As described above, the image of the identical object 1101 is formed at the position of $d_4$ pixels to the left from the optical axis 1108 on the left image 902, and is formed at the position of $d_5$ pixels to the right from the optical axis 1109 on the right image 903, so that a parallax of $d_4 + d_5$ pixels is caused. Therefore, when a distance between the optical axis 1108 of the left image capturing unit 107 and the point 1101 is assumed as x, a distance D from the stereo camera device 105 to the point 1101 can be obtained by the following expressions.

From a relation between the point 1101 and the left image capturing unit $d_2 : f = x : D$
From a relation between the point 1101 and the right image capturing unit $d_3 : f = (d - x) : D$
Accordingly, $D = f * d / (d_2 + d_3) = f * d / \{(d_4 + d_5) * a\}$, where a represents the sizes of image capturing elements of the image planes 1103 and 1105.

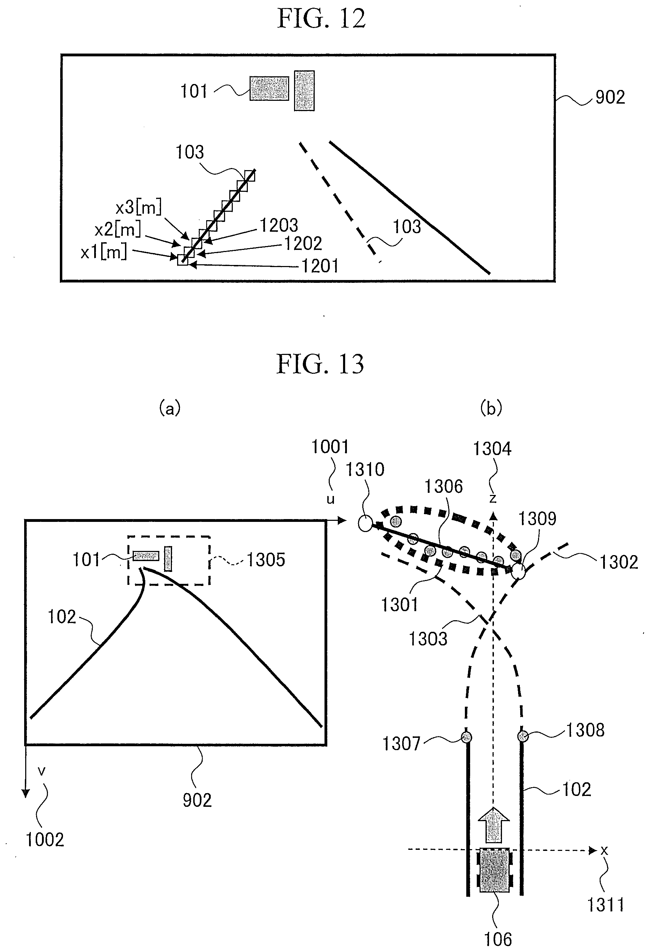

The distance calculation described above is performed for all the correspondence points calculated in the above-mentioned correspondence point calculation process S203. As a result, a distance image as illustrated in Figure 12 can be obtained. Figure 12 illustrates the image 902 picked up by the left image capturing unit 107. In the above-mentioned correspondence point calculation process S203, the correspondence points between the right and left images 902 and 903 can be obtained for a portion having image features such as the white line 103 and the three-dimensional object ahead 101 on the image 902.

Then, in the distance calculation process S204, as illustrated in Figure 12, a distance between the white line 103 or the three-dimensional object ahead 101 and the stereo camera device 105 can be obtained. For example, distances of portions of pixels 1201, 1202, and 1203 in which an image of the white line 103 is formed are $x_1$ [m], $x_2$ [m], and $x_3$ [m], respectively. Data which is obtained by obtaining the distance for all the correspondence points (pixels) calculated in the correspondence point calculation process S203 as described above is referred to as a distance image. Pixels without a correspondence point are determined to contain no distance data.

Then, in a distance information output process S205 in the flow chart of Figure 2, the distance image is outputted to be stored in a storage unit (not shown). Lastly, in a branching process S206 in the flow chart of Figure 2, if there are image input signals from the left image capturing unit 107 and the right image capturing unit 108, the distance information calculation unit 109 returns to the process S201. In the branching process S206, if there are not image input signals from the left image capturing unit 107 and the right image capturing unit 108, the distance information calculation unit 109 waits until the image input signals are inputted thereto.

Figure 3 is a flow chart showing contents of processing performed by the white line detection unit 110. The white line detection unit 110 calculates the presence or absence, the position, and the shape of the white line 103 on the road 102 on the basis of the image picked up by the left image capturing unit 107 or the right image capturing unit 108. First, in a left image input process S301, the white line detection unit 110 receives an image ahead of the vehicle 106 which is picked up by the left image capturing unit 107 of the stereo camera device 105. The image is assumed as a grayscale image.

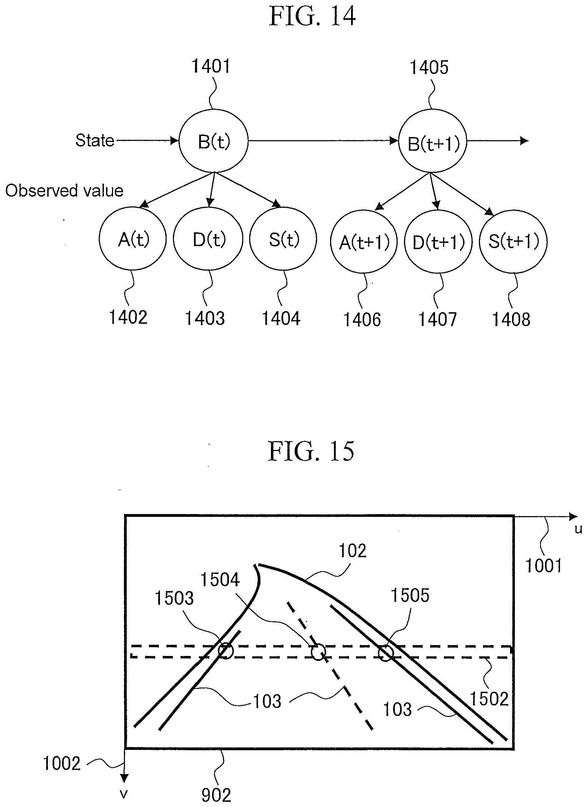

Next, in an edge extraction process S302, an edge which characterizes the white line 103 on the road 102 is extracted from the image 902 received in the left image input process S301. For example, as illustrated in Figure 15, in order to extract the edge of the white line 103 on the road 102 which is picked up by the left image capturing unit 107, a region processing window 1502 (surrounded by a broken line of Figure 15) is set on the left image 902.

In the case where the lateral direction of the image is assumed as the u axis 1001 and the longitudinal direction thereof is assumed as the v axis 1002 in the coordinate system of the left image 902, the processing window 1502 is a rectangle in which the u axis 1001 direction corresponds to the lateral size of the image 902 and the v axis 1002 direction corresponds to several pixels. In the processing window 1502, the gradient of image brightness in the u axis direction is calculated, and a portion having a brightness gradient equal to or higher than a given value is extracted as the edge of the white line.

On the image 902 of Figure 15, intersection portions 1503, 1504, and 1505 between the processing window 1502 and the white line 103 are extracted as the edge of the white line 103. The processing window 1502 is scanned in the v axis 1002 direction, and a process of extracting the edge of the white line is performed for the entire image 902.

Next, in an edge direction determination process S303, all the edges of the white line 103 extracted in the above-mentioned edge extraction process S302 are grouped, and a group facing the vanishing point is determined as a candidate of the white line 103. In this case, it is assumed that the vanishing point is located in an optical axis direction (denoted by 1304 of Figure 13(b)) of the stereo camera device 105.

Next, in a continuity determination process S304, with regard to the candidates of the white line which are grouped in the above-mentioned edge direction determination process S303, the continuity between adjacent edges is determined, and a group of continuous edges is determined as a candidate of the white line. The continuity is determined under the condition that both of a difference between u coordinate values and a difference between v coordinate values of the adjacent edges are small in the u-v coordinate system of Figure 15.

Next, in a white line determination process S305, the edges of the candidates of the white line which are grouped in the above-mentioned continuity determination process S304 are converted into the x-z coordinate system (Figure 13(b)) as an overhead view observed from above the vehicle 106. Then, the edges on the left side of the vehicle 106 (a region of Figure 13(b) in which an x value is negative) among the edges converted on the overhead view are applied to the following equations by using the least squares method or the like.

$$\text{Equation of a straight line } (z = a_3 * x + b_3, \text{ or } x = c_3)$$

or

$$\text{Equation of a curved line } (x = r_3 * \cos\theta + x_{09}, z = r_3 * \sin\theta + z_{09})$$

In a portion matching with the equation of a straight line, the white line 103 is expressed as the equation of a straight line, and in a portion matching with the equation of a curved line, the white line 103 is expressed as the equation of a curved line.

In the case where nothing matches with both of the equations of a straight line and a curved line, it is determined that the group of these edges is not a white line. The same processing is performed also for the edges on the right side of the vehicle 106 (a region of Figure 13(b) in which an x value is positive) among the edges converted above on the overhead view.

Next, in a white line detection result output process S306, the equations of the right and left white lines 103 which are calculated in the above-mentioned white line determination process S305 are outputted. If the white line 103 cannot be detected in the previous processes, an output to the effect that there is no white line is made.

Lastly, in a branching process S307 in the flow chart of Figure 3, if there is an image input signal from the left image capturing unit 107, the white line detection unit 110 returns to the process S301. In the branching process S307, if there is not an image input signal from the left image capturing unit 107, the white line detection unit 110 waits until the image input signal is inputted thereto.

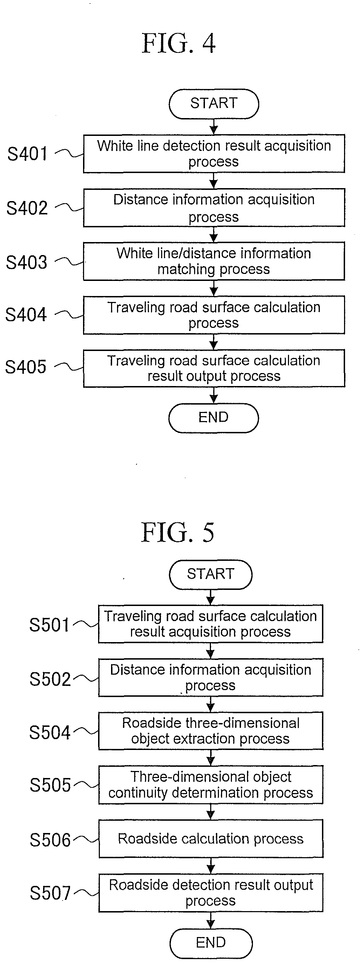

Figure 4 is a flow chart showing contents of processing performed by the traveling road surface calculation unit 111. The traveling road surface calculation unit 111 detects front-back and right-left slopes of the road 102 on the basis of the information from the white line detection unit 110 and the distance information calculation unit 109.

First, in a white line detection result acquisition process S401, the traveling road surface calculation unit 111 receives coordinate values (the u-v coordinate system of Figure 15) of the edges to be the candidates of the white line 103, which are detected in the continuity determination process (304 of Figure 3) performed by the white line detection unit 110 of the stereo camera device 105.

Next, in a distance information acquisition process S402, the traveling road surface calculation unit 111 receives the distance image which is outputted in the distance information output process (205 of Figure 2) performed by the distance information calculation unit 109 of the stereo camera device 105.

Next, in a white line/distance information matching process S403, the coordinate values of the edges to be the candidates of the white line 103 which are acquired in the above-mentioned white line detection result acquisition process S401 are superimposed on the distance image acquired in the above-mentioned distance information acquisition process S402. As a result, a distance from the stereo camera device 105 can be acquired for the edges to be the candidates of the white line 103.

Next, in a traveling road surface calculation process S404, with the use of the information that the white line 103 exists on the road 102, an equation of the traveling road surface representing the front-back and right-left slopes of the road 102 is calculated. The equation is calculated in an x-y-z space obtained by adding a y axis which is an axis perpendicular to the x-z plane of Figure 13(b). Lastly, in a traveling road surface calculation result output process S405, the equation of the traveling road surface calculated in the above-mentioned traveling road surface calculation process S404 is outputted.

Figure 5 is a flow chart showing contents of processing performed by the roadside detection unit 112. The roadside detection unit 112 detects the presence or absence, the position, and the shape of the roadside three-dimensional object 104 on the basis of the information from the traveling road surface calculation unit 111 and the distance information calculation unit 109.

First, in a traveling road surface calculation result acquisition process S501, the roadside detection unit 112 receives the traveling road surface calculation result output process (S405 of Figure 4) performed by the traveling road surface calculation unit 111 of the stereo camera device 105. Next, in a distance information acquisition process S502, the roadside detection unit 112 receives the distance image outputted in the distance information output process (S205 of Figure 2) performed by the distance information calculation unit 109 of the stereo camera device 105.

Next, in a roadside three-dimensional object extraction process S504, the distance image acquired in the above-mentioned distance information acquisition process S502 and the traveling road surface acquired in the above-mentioned traveling road surface calculation result acquisition process S501 are compared with each other, and three-dimensional objects having a height equal to or larger than a given value from the traveling road surface are extracted. Further, from among the extracted three-dimensional objects, three-dimensional objects which are located at a distance approximately half the traffic lane width with respect to the optical axis direction and face the vanishing point are grouped to be determined as candidates of the roadside three-dimensional objects.

Next, in a three-dimensional object continuity determination process S505, with regard to the candidates of the roadside three-dimensional objects grouped in the above-mentioned roadside three-dimensional object extraction process S504, the continuity between adjacent three-dimensional objects is determined, and a group of continuous edges is determined as the roadside three-dimensional object 104 (see Figure 1). The continuity is determined under the condition that both of a difference between u coordinate values and a difference between v coordinate values of the adjacent three-dimensional objects are small in the u-v coordinate system of Figure 15.

Next, in a roadside calculation process S506, a process of calculating an equation representing the presence or absence, the position, and the shape of the roadside three-dimensional object 104 is performed. Here, the roadside three-dimensional objects 104 extracted in the above-mentioned three-dimensional object continuity determination process S505 are converted into the x-z coordinate system (Figure 13(b)) as an overhead view observed from above the vehicle 106.

Next, the roadside three-dimensional objects 104 on the left side of the vehicle 106 (the region of Figure 13(b) in which an x value is negative) among pieces of three-dimensional object information converted on the overhead view are applied to the following equations by using the least squares method or the like.

$$\text{Equation of a straight line } (z = a_3 * x + b_3, \text{ or } x = c_3)$$

or

$$\text{Equation of a curved line } (x = r_3 * \cos\theta + x_{09}, z = r_3 * \sin\theta + z_{09})$$

In a portion matching with the equation of a straight line, the roadside three-dimensional object 104 is expressed as the equation of a straight line, and in a portion matching with the equation of a curved line, the roadside three-dimensional object 104 is expressed as the equation of a curved line.

In the case where nothing matches with both of the equations of a straight line and a curved line, it is finally determined that these are not the roadside three-dimensional objects 104. The same processing is performed also for the roadside three-dimensional objects 104 on the right side of the vehicle 106 (the region of Figure 13(b) in which an x value is positive) among the roadside three-dimensional objects 104 converted above on the overhead view. Lastly, in a roadside detection result output process S507, the equations of the roadside three-dimensional objects 104 which are calculated in the above-mentioned roadside calculation process S506 are outputted.

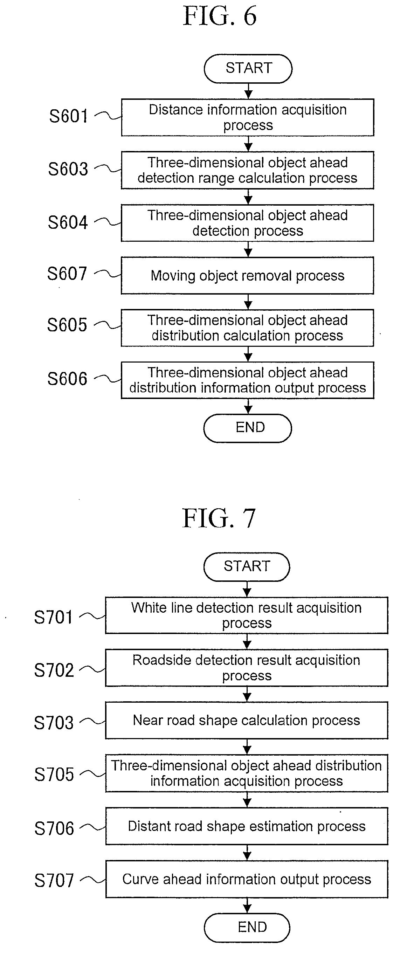

Figure 6 is a flow chart showing contents of processing performed by the three-dimensional object ahead detection unit 114. The three-dimensional object ahead detection unit 114 calculates the presence or absence and the position of the three-dimensional object ahead 101 existing in the vicinity of the vanishing point of the road 102 on the basis of the information from the distance information calculation unit 109.

First, in a distance information acquisition process S601, the three-dimensional object ahead detection unit 114 receives the distance image outputted by the distance information calculation unit 109 of the stereo camera device 105. It should be noted that the distance image is outputted in the distance information output process S205 in the flow chart (Figure 2) of the distance information calculation unit 109, in which distance information from the camera device 105 is described for data containing an image formed in each pixel of the image.

Next, in a three-dimensional object ahead detection range calculation process S603, a position of a processing window 1305 for detecting the three-dimensional object ahead 101 is calculated within the left image 902 (the lateral direction of the image is the u axis 1001, and the longitudinal direction thereof is the v axis 1002) picked up ahead of the vehicle 106 illustrated in Figure 13(a). The processing window 1305 is set to the vicinity of the vanishing point of the traveling road 102, and has a rectangular shape.

In the case where the white line 103 has been detected by the white line detection unit 110, the vanishing point of the traveling road 102 is assumed to exist in an extension direction of the detected white line 103. On the other hand, in the case where the white line 103 has not been detected by the white line detection unit 110, the vanishing point is assumed to exist in the optical axis direction of the left image 902 picked up ahead of the vehicle 106. The size of the processing window 1305 is such a size that allows the three-dimensional object ahead 101 in the vanishing point direction of the road 102 to be fitted inside thereof. In the present embodiment, a length thereof in the u axis 1001 direction is set to approximately 1/3 the lateral size of the image, and a length thereof in the v axis 1002 direction is set to approximately 1/5 the longitudinal size of the image.

Next, in a three-dimensional object ahead detection process S604, the three-dimensional objects 101 within a range of the processing window 1305 of Figure 13(a) which is calculated in the above-mentioned three-dimensional object ahead detection range calculation process S603 are detected. For this purpose, for all the pixels within the processing window 1305, distance data of a pixel having the same u-v coordinate value is extracted from the distance image acquired in the above-mentioned distance information acquisition process S601. If there is no distance data, the corresponding pixel is determined to contain no distance data.

Next, in a moving object removal process S607, a leading vehicle and an oncoming vehicle traveling on the road 102 are removed as noise from the three-dimensional objects detected in the above-mentioned three-dimensional object ahead detection process S604. For this purpose, time-series data of a detected three-dimensional object is extracted, and a relative speed between the detected three-dimensional object and the target vehicle 106 is calculated on the basis of a change in distance data of the three-dimensional object and a change in speed data of the target vehicle 106. In the case where the calculated relative speed has a value approaching the target vehicle 106 and an absolute value of the relative speed is larger than an absolute value of the speed of the target vehicle 106, the detected three-dimensional object is removed as an oncoming vehicle. On the other hand, in the case where the calculated relative speed has a value moving farther from the target vehicle 106, the detected three-dimensional object is removed as a leading vehicle.

Next, in a three-dimensional object ahead distribution calculation process S605, with regard to the distance data within the processing window 1305 of Figure 13(a) which is extracted in the above-mentioned three-dimensional object ahead detection process S604, distribution thereof on a coordinate system observed from above the vehicle 106 is obtained. Figure 13(b) is a view which is obtained by converting the left image 902 of Figure 13(a) into the coordinate system as an overhead view observed from above the vehicle 106, in which the traveling direction of the vehicle 106 is assumed as the z axis 1304, and a vehicle width direction orthogonal to the traveling direction of the vehicle is assumed as an x axis 1311.

Here, pieces of distance data (the distances from the camera) of the respective pixels within the processing window 1305 are projected to the x-z plane of Figure 13(b). The projected points become respective points within 1301 of Figure 13(b). In addition, the pieces of distance data of the respective pixels become z values on the coordinate system of Figure 13(b).

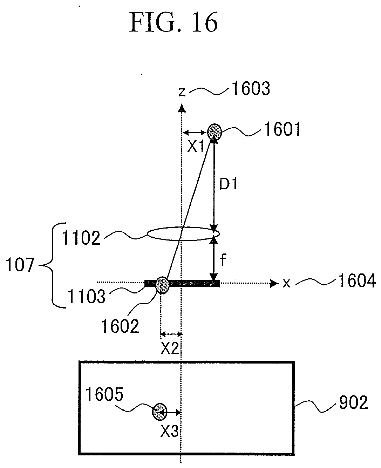

Figure 16 is a view illustrating a method of obtaining an x value of each pixel. In Figure 16, the left image capturing unit 107 is a camera which is formed of the lens 1102 and the image plane 1103 and has the focal length f and an optical axis of a z axis 1603, and the z axis 1603 of Figure 16 corresponds to the z axis 1304 of Figure 13(b).

In addition, when a perpendicular axis which includes the image plane 1103 of Figure 16 and is orthogonal to the z axis 1603 is assumed as an x axis 1604, the x axis 1604 of Figure 16 corresponds to the x axis 1311 of Figure 13(b). Therefore, the x value of each point within 1301 of Figure 13(b) is the same as an x value $X_1$ of a point 1601 of Figure 16. Here, it is assumed that an image of the point 1601 is formed at a position of $X_2$ on the image plane 1602 from the optical axis 1603. That is, when the size of the image capturing element of the image plane 1103 in the x axis 1604 direction is assumed as a, the image of the point 1601 is formed at a position 1605 of a pixel of $X_3 = X_2 / a$ from the optical axis 1603 of the left image 902. In this case, when a distance between the point 1601 and the lens 1102 of the camera is assumed as $D_1$, the following expression is obtained.

$$X_2 : f = X_1 : D_1$$

As a result, the following expression is established.

$$X_1 = D_1 * X_2 / f = D_1 * X_3 * a / f$$

Here, when a u axis value of the three-dimensional object ahead 101 on the image 902 of Figure 13(a) is assumed as $U_1$ and a size of the image 902 in the u axis direction is assumed as a $U_2$ pixel, X3 of Figure 16 is equivalent to $|U_2 / 2 - U_1|$ of Figure 13(a).

In addition, $D_1$ of Figure 16 is equivalent to the distance data (z value) of the point within 1301 of Figure 13(b). In this way, the three-dimensional object ahead 101 of Figure 13(a) can be projected to the coordinate system of Figure 13(b), and the result corresponds to an x-z coordinate value of each point within 1301.

Next, with regard to the distribution 1301 of the three-dimensional objects ahead 101 projected to the x-z coordinate system of Figure 13(b), a direction of a shape thereof is calculated. For this purpose, a line segment 1306 which passes the vicinities of the respective points of the three-dimensional objects ahead 101 projected to the x-z coordinate system is calculated.

In the case where an expression of the line segment 1306 is assumed as z = ax + b in the x-z coordinate system, a and b are decided so that the sum of the square of the distance between each point within the distribution 1301 of the three-dimensional objects ahead 101 and z = ax + b is the smallest. Further, an x value of an existing range ($x_1 \leq x \leq x_2$) of the respective points distributed within 1301 is extracted.

Lastly, in a three-dimensional object ahead distribution information output process S606, the expression of z = ax + b and the x range of $x_1 \leq x \leq x_2$ which are calculated in the above-mentioned three-dimensional object ahead distribution calculation process S605 are outputted and stored. In addition, the distance information of each point regarding the three-dimensional object ahead 101 calculated in the three-dimensional object ahead detection process S604 is outputted and stored at the same time.

Figure 7 is a flow chart showing contents of processing performed by the curve ahead estimation unit 113. The curve ahead estimation unit (road shape estimation unit) 113 estimates a shape of a curve (a shape of a road) ahead of the vehicle on the basis of the information from the white line detection unit 110 and the roadside detection unit 112.

First, in a white line detection result acquisition process S701, the curve ahead estimation unit 113 receives the data regarding the position and the shape of the white line 103 ahead of the vehicle 106, which is outputted in the white line detection result output process S306 (Figure 3) of the white line detection unit 110. Next, in a roadside detection result acquisition process S702, the curve ahead estimation unit 113 receives the data regarding the position and the shape of the roadside three-dimensional object 104 along the road 102 ahead of the vehicle 106, which is outputted in the roadside detection result output process S507 of the roadside detection unit 112.

Next, in a near road shape calculation process S703, with the use of the data acquired in the above-mentioned white line detection result acquisition process S701 and the data acquired in the above-mentioned roadside detection result acquisition process S702, the road shape of a near portion which is a portion of the road 102 near the vehicle 106 is calculated.

In the case where the white line detection result has been acquired and the roadside detection result has not been acquired, the road shape of the near portion is calculated by only the white line detection result. On the other hand, in the case where the white line detection result has not been acquired and the roadside detection result has been acquired, the road shape of the near portion is calculated by only the roadside detection result. In the case where both of the white line detection result and the roadside detection result have not been acquired, the curve ahead estimation unit 113 proceeds to the next process without performing this process.

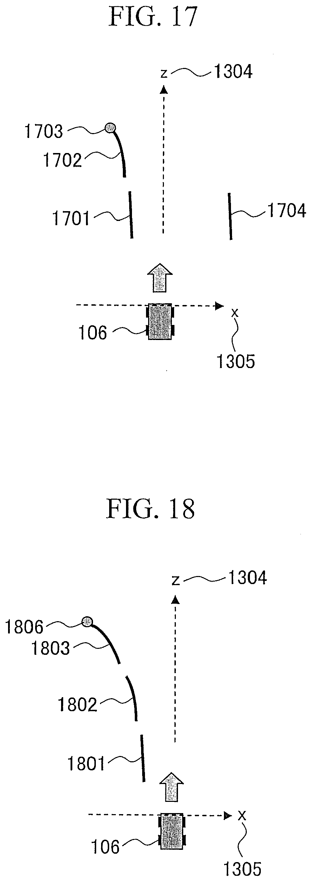

Figure 17 is a view in which the vehicle 106 and the road 102 are observed from above, and is expressed as the x-z coordinate system similarly to Figure 13(b). Here, reference numerals 1701 and 1702 of Figure 17 each denote the white line detection result.

The white line detection result 1701 is a portion which can be expressed by an equation 1705 of a straight line ($z = a_1 * x + b_1$, or $x = c_1$ ($x_{01} \leq x \leq x_{02}$)), and the white line detection result 1702 is a portion which can be expressed by an equation 1706 of a curved line ($x = r_1 * \cos\theta + x_{03}$, $z = r_1 * \sin\theta + z_{03}$ ($\theta_{01} \leq \theta \leq \theta_{02}$)).

In the case of an example illustrated in Figure 17, the combination of the equation 1705 of a straight line and the equation 1706 of a curved line is used for the road shape of the near portion. In the case where the white line detection result includes only a straight line, only the equation 1705 of a straight line is used for the road shape of the near portion. In addition, in the case where the white line detection result includes only a curved line, only the equation 1706 of a curved line is used for the road shape of the near portion.

In addition, as indicated by a white line detection result 1704 of Figure 17, in the case where the white line 1704 which is paired with the white lines 1701 and 1702 is detected at the same time, the white line 1704 is also outputted together therewith. Further, in this process, in the case where the expression of the road shape of the near portion includes a portion of $z \geq z_{05}$ (a portion far from the vehicle 106), the output is made with the portion of $z \geq z_{05}$ being deleted. Here, $z_{05}$ is given as a limit point up to which the white line detection result is reliable in view of the degree of reliability of the white line detection result, the history of the history of the white line detection result, and the like. Further, at the time of outputting the road shape of the near portion, a coordinate value $(x_{04}, z_{04})$ of a point 1703 in the calculated road shape, which is the farthest from the vehicle 106, is also outputted.

On the other hand, in the case where both of the white line detection result and the roadside detection result have been acquired, with the use of both of the white line detection result and the roadside detection result, the road shape of the near portion is calculated. Figure 18 is a view in which the vehicle 106 and the road 102 are observed from above, and is expressed as the x-z coordinate system similarly to Figure 13(b). Here, 1801 and 1802 each denote the white line detection result, and 1803 denotes the roadside detection result.

With regard to the white line detection results 1801 and 1802, similarly to Figure 17 described above, the white line detection result 1801 is a portion which can be expressed by a straight line, and the white line detection result 1802 is a portion which can be expressed by a curved line. Depending on the detection results, only any one of 1801 and 1802 may be acquired.

Similarly to the white line detection results 1801 and 1802, the road detection result 1803 is expressed by an equation 1804 of a straight line ($z = a_2 * x + b_2$, or $x = c_2$ ($x_{05} \leq x \leq x_{06}$)) or an equation 1805 of a curved line ($x = r_2 * \cos\theta + x_{07}$, $z = r_2 * \sin\theta + z_{07}$ ($\theta_{03} \leq \theta \leq \theta_{04}$)).

Then, in this process, these equations of the white line detection results 1801 and 1802 and the road detection result 1803 are combined to be outputted as the road shape of the near portion. Then, similarly to the case of Figure 17, in the case where the expression of the road shape of the near portion includes a portion of $z \geq z_{05}$ (a portion far from the vehicle 106), the output is made with the portion of $z \geq z_{05}$ being deleted. Further, at the time of outputting the road shape of the near portion, a coordinate value $(x_{08}, z_{08})$ of a point 1806 in the calculated road shape, which is the farthest from the vehicle 106, is also outputted.

Next, in a three-dimensional object ahead distribution information acquisition process S705, the curve ahead estimation unit 113 receives the data regarding the distribution of the three-dimensional objects ahead 101, which is outputted in the three-dimensional object ahead distribution information output process S606 (Figure 6) of the three-dimensional object ahead detection unit 114.

Next, in a distant road shape estimation process S706, with the use of the information acquired in the above-mentioned three-dimensional object ahead distribution information acquisition process S705, the road shape of a distant portion in the road 102 is estimated. In Figure 13(b), points 1307 and 1308 are the farthest points (1703 of Figure 17 and 1806 Figure 18) which are the farthest from the vehicle 106 in the near road shape calculated in the above-mentioned near road shape calculation process S703.

On the other hand, the three-dimensional object ahead distribution information corresponds to the line segment 1306 of Figure 13(b) (the expression of $z = ax + b$ and the x range of $x_1 \leq x \leq x_2$). With the use of the information of the farthest points 1307 and 1308 and the line segment 1306, the distant road shape is estimated. Here, coordinates of end points (1309 and 1310) of the line segment 1306 are first outputted. Next, equations of: a curved line connecting the farthest point 1307 and the end point 1309; a curved line connecting the farthest point 1307 and the end point 1310; a curved line connecting the farthest point 1308 and the end point 1309; and a curved line connecting the farthest point 1308 and the end point 1310 are calculated. The equations of the curved lines each are an equation of a circle, and touch the equations 1702 and 1803 illustrated in Figure 17 and Figure 18 as a constraint condition.

Here, in the case where the near road shape calculation result has not been acquired, for the coordinate value $(x_{08}, z_{08})$ of the farthest point 1307, it is assumed that a standard width of the traffic lane is $L_1$, $x_{08} = -L_1 / 2$, and $z_{08} = z_{05}$ (the values calculated in the above-mentioned near road shape calculation process S703). Similarly, for the coordinate value $(x_{09}, z_{09})$ of the farthest point 1308, it is assumed that $x_{09} = L_1 / 2$, and $z_{09} = z_{05}$. Further, with regard to the equivalents of the equations 1702 and 1803, it is assumed that $x = x_{08}$ for an expression passing the farthest point 1307, and $x = x_{09}$ for an expression passing the farthest point 1308. Moreover, the near road shape is assumed as a straight line. Under these assumptions, this process is performed.

Lastly, in a curve ahead information output process S708, only the equation of a curved line among the equations of a straight line and a curved line obtained in the above-mentioned near road shape calculation process S703 and the equation of a curved line obtained in the distant road shape estimation process S705 are outputted to the vehicle control device 117 mounted on the vehicle 106.

Figure 8 is a flow chart showing contents of processing performed by the brake control determination unit 116. The brake control determination unit 116 determines whether or not the automatic brake control of the vehicle 106 is necessary, on the basis of the information from the three-dimensional object ahead detection unit 114.

First, in a three-dimensional object ahead detection information acquisition process S801, the brake control determination unit 116 receives the data regarding the three-dimensional object ahead 101, which is outputted in the three-dimensional object ahead distribution information output process S606 (Figure 6) of the three-dimensional object ahead detection unit 114.

Next, in a learning data acquisition process S802, the brake control determination unit 116 receives brake control learning data 115. Here, the brake control learning data 115 is described. The learning data is obtained by learning: the distribution of the three-dimensional objects ahead acquired in the above-mentioned three-dimensional object ahead detection information acquisition process S801 (the equation of the line segment 1306 of Figure 13(b)); the distance from the vehicle 106 to the three-dimensional object ahead (the line segment 1306 of Figure 13(b)); the speed of the vehicle 106; and a relation of turning on/off of a brake operation by a driver of the vehicle 106.

That is, in a dynamic Bayesian network illustrated in Figure 14, A(t) 1402 represents the slope of the line segment 1306 of Figure 13(b) which is an output of the distribution of the three-dimensional objects ahead, D(t) 1403 represents the distance from the vehicle 106 to the line segment 1306 of Figure 13(b), S(t) 1404 represents the speed of the vehicle 106; and B(t) 1401 represents the probability of turning on/off of the brake operation performed by the driver (operator) of the vehicle 106.

In addition, A(t + 1), D(t + 1), S(t + 1), and B(t + 1) are time-series data of A(t), D(t), S(t), and B(t), respectively. That is, in the dynamic Bayesian network, B(t) corresponds to a "state", and A(t), D(t), and S(t) each correspond to an "observed value". These values are learned, whereby respective prior probabilities can be obtained as P(B(t + 1)|B(t)), P(A(t)|B(t)), P(D(t)|B(t)), and P(S(t)|B(t)). These prior probabilities are prepared in advance as the brake control learning data 115 before this device is mounted on a product. In addition, even after this device is mounted on a product, it is possible to update the contents of the brake control learning data 115 on the basis of the history data of the manual brake operation by the driver.

Next, in a brake control probability calculation process S803, with the use of the brake control learning data 115 acquired in the above-mentioned learning data acquisition process S802 and the current observed values A(t), D(t), and S(t), the probability B(t) is calculated as to whether or not there is a possibility that the driver of the vehicle 106 will manually perform the brake control in the state of these observed values.

In the case where a value of the probability B(t) is higher than a preset reference value, there is a high possibility that the driver of the vehicle 106 will perform the brake operation in the state of the observed values A(t), D(t), and S(t), which accordingly means that it is better to perform the automatic brake control.

Lastly, in a brake control determination output process S804, the determination as to whether or not it is better to perform the automatic brake control, which is calculated in the above-mentioned brake control probability calculation process S803, is outputted to the vehicle control device 117 mounted on the vehicle 106 in the form of the brake on/off probability B(t).

Next, a description is given of processing performed by the vehicle control device 117 mounted on the vehicle 106. The vehicle control device 117 performs the automatic brake control in which the brake is controlled before a curve and the target vehicle is thus decelerated, and receives data from the curve ahead estimation unit 113 and the brake control determination unit 116 of the stereo camera device 105.

The content of the data received from the curve ahead estimation unit 113 is the data regarding the shape of the curve ahead of the vehicle 106, which is outputted in the curve ahead information output process S707 in the flow chart of Figure 7. On the other hand, the data received from the brake control determination unit 116 is the data of the probability as to whether or not the automatic brake control needs to be performed in the vehicle 106, which is outputted in the brake control determination output process S804 in the flow chart of Figure 8.

A CPU included in the vehicle control device 117 transmits a signal as to whether or not to perform the automatic brake control, to an actuator of a braking system (not shown) on the basis of these pieces of data from the stereo camera device 105.

In the case where both of the data from the curve ahead estimation unit 113 and the data from the brake control determination unit 116 have been acquired, whether or not to perform the automatic brake control is determined on the basis of the data from the curve ahead estimation unit 113. In the case where any one of these pieces of data has been acquired, it is determined on the basis of the received data. In the case where no data has been acquired, the automatic brake control is not performed.

With the stereo camera device 105 described above, the road shape of the distant portion of the road 102 or the road shapes of the distant portion and the near portion of the road 102 can be estimated on the basis of the detection result of the three-dimensional object ahead 101 by the three-dimensional object ahead detection unit 114. Accordingly, the automatic deceleration control can be performed before the vehicle enters a curve at which the brake control is necessary, even in the situation where the white line 103 or the roadside three-dimensional object 104 is difficult to detect or irrespective of the presence or absence of the white line 103 or the roadside three-dimensional object 104.

In addition, whether or not to perform the brake control is determined on the basis of the detection result of the three-dimensional object ahead 101 by the three-dimensional object ahead detection unit 114. Accordingly, with the vehicle control device 117, it is possible to perform the automatic brake control before the vehicle enters a curve at which the brake control is necessary.

**Claims**

**1.** A camera device mountable at a vehicle (106) including a plurality of image capturing units (107, 108) which each are configured to take an image of a traveling road ahead of a target vehicle, **characterized by** comprising:

a distance information calculation unit (109) configured to calculate the presence or absence of three-dimensional objects ahead (101) by comparing respective images picked up by a left image capturing unit (107) and a right image capturing unit (108), and to calculate a distance from the vehicle (106) to the three-dimensional objects ahead (101),
a three-dimensional object ahead detection unit (114) configured to detect three-dimensional non-moving objects ahead (101) existing in an area of a vanishing point of the traveling road using the distances calculated by the distance information calculation unit (109);
a white line detection unit (110) configured to detect a white line of the traveling road in a near portion before a limit point which is the limit point up to which the white line detection is reliable and deleting the output farther than the limit point,
a roadside detection unit (112) configured to detect a roadside three-dimensional object (104) arranged along a side of the traveling road,
a curve ahead estimation unit (113) configured to estimate a road shape of the traveling road, wherein
the curve ahead estimation unit (113) is configured to estimate the road shape of a distant portion, which is located farther away from the vehicle (106) than a near portion, using the output of three-dimensional object ahead detection unit (114), and
the curve ahead estimation unit (113) is configured to estimate a road shape of the near portion on the traveling road, which is located between the vehicle (106) and the distant portion, using a detection result detected by the white line detection unit (110) or by the roadside detection unit (112).

**2.** The camera device according to claim 1, further comprising:
a brake control determination unit (116) configured to determine whether or not brake control of the target vehicle needs to be performed, on the basis of a distribution of the three-dimensional objects ahead (101) which is calculated by the three-dimensional object ahead detection unit (114), a distance from the target vehicle to the three-dimensional objects ahead (101), and a speed of the target vehicle.

**3.** The camera device according to Claim 2, further comprising brake control learning data which is obtained by learning in advance: the distribution of the three-dimensional objects ahead (101); the distance from the target vehicle to the three-dimensional objects ahead (101); the speed of the target vehicle; and a relation of a brake operation by a driver of the vehicle, wherein
the brake control determination unit (116) is configured to calculate, on the basis of the brake control learning data and respective observed values of: the distribution of the three-dimensional objects ahead (101); the distance from the target vehicle to the three-dimensional objects ahead (101); and the speed of the target vehicle, a probability as to whether or not there is a possibility that the driver of the vehicle will perform the brake control, and to determine that the brake control needs to be performed, when the probability is higher than a preset reference value.

**Patentansprüche**

**1.** Kameravorrichtung, die an ein Fahrzeug (106) montiert werden kann, die mehrere Bildaufnahmeeinheiten (107, 108) umfasst, die jeweils konfiguriert sind, ein Bild einer Fahrstraße vor einem Zielfahrzeug aufzunehmen, **gekennzeichnet durch**:

eine Einheit (109) zum Berechnen von Abstandsinformationen, die konfiguriert ist, die Anwesenheit oder Abwesenheit von vorausliegenden dreidimensionalen Objekten (101) zu berechnen, indem entsprechende Bilder, die durch eine Einheit (107) zum Aufnehmen von linken Bildern und einer Einheit (108) zum Aufnehmen von rechten Bildern aufgenommen werden, verglichen werden, und einen Abstand von dem Fahrzeug (106) zu den vorausliegenden dreidimensionalen Objekten (101) zu berechnen,
eine Einheit (114) zum Detektieren von vorausliegenden dreidimensionalen Objekten, die konfiguriert ist, vorausliegende dreidimensionale unbewegliche Objekte (101), die sich in einem Bereich eines Fluchtpunkts der Fahrstraße befinden, unter Verwendung der Abstände, die durch die Einheit (109) zum Berechnen von Abstandsinformationen berechnet werden, zu detektieren;

eine Einheit (110) zum Detektieren von weißen Linien, die konfiguriert ist, eine weiße Linie der Fahrstraße in einem nahen Abschnitt vor einem Grenzpunkt, der der Grenzpunkt ist, bis zu dem die Detektion von weißen Linien zuverlässig ist, zu detektieren und die Ausgabe, die weiter weg ist als der Grenzpunkt, zu löschen,

eine Einheit (112) zum Detektieren des Straßenrands, die konfiguriert ist, ein dreidimensionales Straßenrandobjekt (104), das entlang einer Seite der Fahrstraße angeordnet ist, zu detektieren,

eine Einheit (113) zum Schätzen einer vorausliegenden Kurve, die konfiguriert ist, eine Straßenform der Fahrstraße zu schätzen, wobei

die Einheit (113) zum Schätzen einer vorausliegenden Kurve konfiguriert ist, die Straßenform eines entfernten Abschnitts, der sich weiter von dem Fahrzeug (106) entfernt befindet als ein naher Abschnitt, unter Verwendung der Ausgabe der Einheit (114) zum Detektieren von vorausliegenden dreidimensionalen Objekten zu schätzen, und

die Einheit (113) zum Schätzen der vorausliegenden Kurve konfiguriert ist, eine Straßenform des nahen Abschnitts der Fahrstraße, die sich zwischen dem Fahrzeug (106) und dem entfernten Abschnitt befindet, unter Verwendung eines Detektionsergebnisses, das durch die Einheit (110) zum Detektieren von weißen Linien oder durch die Einheit (112) zum Detektieren des Straßenrands detektiert wird, zu schätzen.

2. Kameravorrichtung nach Anspruch 1, die ferner Folgendes umfasst:

eine Bremssteuerungsbestimmungseinheit (116), die konfiguriert ist, auf der Basis einer Verteilung der vorausliegenden dreidimensionalen Objekte (101), die durch die Einheit (114) zum Detektieren von vorausliegenden dreidimensionalen Objekten berechnet wird, eines Abstands von dem Zielfahrzeug zu den vorausliegenden dreidimensionalen Objekten (101) und einer Geschwindigkeit des Zielfahrzeugs zu bestimmen, ob die Bremssteuerung ausgeführt werden muss oder nicht.

3. Kameravorrichtung nach Anspruch 2, die ferner Bremssteuerungslerndaten umfasst, die durch Lernen im Voraus erhalten werden: die Verteilung der vorausliegenden dreidimensionalen Objekte (101); der Abstand von dem Zielfahrzeug zu den vorausliegenden dreidimensionalen Objekten (101); die Geschwindigkeit des Zielfahrzeugs und eine Beziehung eines Bremsvorgangs durch einen Fahrer des Fahrzeugs, wobei

die Bremssteuerungsbestimmungseinheit (116) konfiguriert ist, auf der Basis der Bremssteuerungslerndaten und der jeweiligen beobachteten Werte der Verteilung der vorausliegenden dreidimensionalen Objekte (101), des Abstands von dem Zielfahrzeug zu den vorausliegenden dreidimensionalen Objekten (101) und der Geschwindigkeit des Fahrzeugs zu berechnen, ob es eine Möglichkeit gibt, dass der Fahrer des Fahrzeugs die Bremssteuerung ausführen wird, und zu bestimmen, dass die Bremssteuerung ausgeführt werden muss, wenn die Wahrscheinlichkeit höher ist als ein voreingestellter Bezugswert.

**Revendications**

1. Dispositif à caméra susceptible d'être monté sur un véhicule (106) incluant une pluralité d'unités de capture d'image (107, 108) qui sont configurées chacune pour prendre une image d'une route de circulation en avant d'un véhicule cible,

**caractérisé en ce qu'**il comprend :

une unité de calcul d'information de distance (109) configurée pour calculer la présence ou l'absence d'objets tridimensionnels (101) en avant en comparant des images respectives prises par une unité de capture d'image à gauche (107) et par une unité de capture d'image à droite (108), et pour calculer une distance depuis le véhicule (106) jusqu'aux objets tridimensionnels (101) en avant,

une unité de détection d'objets tridimensionnels (114) en avant configurée pour détecter des objets tridimensionnels immobiles (101) en avant existant dans une zone d'un point de fuite de la route de circulation en utilisant les distances calculées par l'unité de calcul d'information de distance (109) ;

une unité de détection de ligne blanche (110) configurée pour détecter une ligne blanche de la route de circulation dans une portion proche avant un point limite qui est le point limite jusqu'auquel la détection de ligne blanche est fiable et pour effacer la sortie plus loin que le point limite,

une unité de détection de bordure de route (112) configurée pour détecter un objet tridimensionnel en bordure de route (104) agencé le long d'une bordure de la route de circulation,

une unité d'estimation de courbe (113) en avant configurée pour estimer une forme de la route de circulation, dans lequel

l'unité d'estimation de courbe (113) en avant est configurée pour estimer la forme d'une portion distante de la route, qui est située plus loin du véhicule (106) qu'une portion proche, en utilisant la sortie de l'unité de détection d'objets tridimensionnels (114) en avant, et

l'unité d'estimation de courbe (113) en avant est configurée pour estimer une forme de la portion proche sur la route de déplacement, qui est située entre le véhicule (106) et la portion distante, en utilisant un résultat de détection détecté par l'unité de détection de ligne blanche (110) ou par l'unité de détection de bordure de route (112).

2. Dispositif à caméra selon la revendication 1, comprenant en outre :
une unité de détermination de commande de frein (116) configuré pour déterminer s'il est nécessaire d'effectuer ou non une commande du frein du véhicule cible, sur la base d'une distribution des objets tridimensionnels (101) en avant, qui est calculée par l'unité de détection d'objets tridimensionnels (114) en avant, d'une distance depuis le véhicule cible jusqu'aux objets tridimensionnels (101) en avant, et d'une vitesse du véhicule cible.

3. Dispositif à caméra selon la revendication 2, comprenant en outre des données d'apprentissage de commande de frein qui sont obtenues en apprenant à l'avance : la distribution des objets tridimensionnels (101) en avant ; la distance depuis le véhicule cible jusqu'aux objets tridimensionnels (101) en avant ; la vitesse du véhicule cible ; et une relation d'une opération de freinage par un conducteur du véhicule, dans lequel

l'unité de détermination de commande de frein (116) est configurée pour calculer, sur la base des données d'apprentissage de commande de frein et de valeurs observées respectives de la distribution des objets tridimensionnels (101) en avant ; de la distance depuis le véhicule cible jusqu'aux objets tridimensionnels (101) en avant ; et de la vitesse du véhicule cible, une probabilité quant à savoir s'il y a ou non une possibilité que le conducteur de véhicule va effectuer la commande de freinage, et pour déterminer qu'il est nécessaire d'effectuer la commande de freinage quand la probabilité est plus élevée qu'une valeur de référence préétablie.

# FIG. 1

Distance information calculation unit

White line detection unit

Traveling road surface calculation unit

Roadside detection unit

Three-dimensional object ahead detection unit

Curve ahead estimation unit

Brake control determination unit

Vehicle control device

Before-curve automatic braking

# FIG. 2

START

S201 — Left image input process

S202 — Right image input process

S203 — Correspondence point calculation process

S204 — Distance calculation process

S205 — Distance information output process

S206 — Are there image input signals? — No

Yes

# FIG. 3

START

S301 — Left image input process

S302 — Edge extraction process

S303 — Edge direction determination process

S304 — Continuity determination process

S305 — White line determination process

S306 — White line detection result output process

S307 — Is there an image input signal? — No

Yes

# FIG. 4

START

S401 — White line detection result acquisition process

S402 — Distance information acquisition process

S403 — White line/distance information matching process

S404 — Traveling road surface calculation process

S405 — Traveling road surface calculation result output process

END

# FIG. 5

START

S501 — Traveling road surface calculation result acquisition process

S502 — Distance information acquisition process

S504 — Roadside three-dimensional object extraction process

S505 — Three-dimensional object continuity determination process

S506 — Roadside calculation process

S507 — Roadside detection result output process

END

# FIG. 6

START

S601 — Distance information acquisition process

S603 — Three-dimensional object ahead detection range calculation process

S604 — Three-dimensional object ahead detection process

S607 — Moving object removal process

S605 — Three-dimensional object ahead distribution calculation process

S606 — Three-dimensional object ahead distribution information output process

END

# FIG. 7

START

S701 — White line detection result acquisition process

S702 — Roadside detection result acquisition process

S703 — Near road shape calculation process

S705 — Three-dimensional object ahead distribution information acquisition process

S706 — Distant road shape estimation process

S707 — Curve ahead information output process

END

# FIG. 8

START

S801 — Three-dimensional object ahead detection information acquisition process

S802 — Learning data acquisition process

S803 — Brake control probability calculation process

S804 — Brake control determination output process

END

115 — Brake control learning data

# FIG. 9

102

901

107   108

105

905
903

d1

902
904

## FIG. 10

Left image

1006
1003
1001
902
v
1002

Right image

1004 1005 1004
1001
903
v
1002

## FIG. 11

x
1101
D
1108
1109
107
1102
1104
108
1103
f
1105
1106
d
1107
d2
d3

left image
1108
d4
1106
902

right image
1109
d5
1107
903

# FIG. 12

# FIG. 13

(a)　　　　　　　　　　　(b)

# FIG. 14

1401

1405

State → B(t) → B(t+1) →

Observed value

A(t)　D(t)　S(t)　　A(t+1)　D(t+1)　S(t+1)

1402　1403　1404　　1406　1407　1408

# FIG. 15

102

1504

1503

1505

u

1001

1502

103

103

1002

v

902

# FIG. 16

## FIG. 17

## FIG. 18

**REFERENCES CITED IN THE DESCRIPTION**

**Patent documents cited in the description**

- JP 2001010518 A
- JP 2001256600 A
- JP 2008304957 A